# EUROPEAN PATENT SPECIFICATION

(11) **EP 0 594 791 B1**
(45) Date of publication and mention of the grant of the patent: **19.04.2000**
(21) Application number: 92917919.0
(22) Date of filing: 13.07.1992
(51) Int. Cl.: A22B 5/00, A22B 5/20

(54) **METHOD AND DEVICE FOR OPENING A SLAUGHTERED ANIMAL**
VERFAHREN UND VORRICHTUNG ZUM AUFSCHNEIDEN EINES TIERKÖRPERS
PROCEDE ET DISPOSITIF PERMETTANT D'OUVRIR UN ANIMAL ABATTU

(30) Priority: 18.07.1991 NL 9101262; 06.04.1992 NL 9200649
(43) Date of publication of application: 04.05.1994
(73) Proprietor: Stork MPS B.V., 7131 PG Lichtenvoorde (NL)
(72) Inventor: VAN OCHTEN, Sander Antonie, NL-7132 CD Lichtenvoorde (NL); TIGGELOVEN, Leonardus Jozephus Antonius, NL-7141 PK Groenlo (NL)
(74) Representative: Schumann, Bernard Herman Johan
(86) International application number: NL9200129
(87) International publication number: WO9301725

(56) References cited:
- EP-A- 0 212 579
- EP-A- 0 258 937
- AU-A- 573 603
- DE-A- 2 626 070
- US-A- 1 465 866
- US-A- 1 498 753
- US-A- 2 198 814
- US-A- 3 174 223
- US-A- 3 241 236
- US-A- 3 445 931
- US-A- 4 682 417

## Description

The invention relates to a method for opening a slaughtered animal. Such a method is e.g. known from DE-C-237 892. This document discloses a method for opening a slaughtered animal comprising the following steps of:
(1) providing a slaughtered animal;
(2) suspending the animal from the hind legs;
(3) arranging a cut only in the belly wall close to the hind legs substantially in the plane of symmetry of the animal;
(4) continuing this cut in substantially vertical downward direction; and
(5) holding the intestines clear of the belly wall during step (4).

The invention now provides a method for opening a slaughtered animal comprising the following steps of:
(1) providing a slaughtered animal;
(2) suspending the animal from the hind legs;
(3) arranging a cut only in the belly wall close to the hind legs substantially in the plane of symmetry of the animal;
(4) continuing this cut in substantially vertical downward direction;
(5) holding the intestines clear of the belly wall during step (4);
(6) tensioning the belly wall during step (4) by pushing the belly wall outward;
(7) continuing the cut after step (4) to cut through the midriff;
(8) continuing the cut after step (6) to cut through the breast bone.

Different from the mentioned prior art the belly wall is tensioned during step (4) by pushing the belly wall outward. In this connection it is noted that the shape of the pin 15 according to DE-237 892 does not allow this pin to perform such tensioning function. Pushing the belly wall outward in accordance with the invention avoids the risk of cutting into the internal organs. The pre-cut can be made without a great deal of caution because the organs at that position lie sufficiently free of the belly wall, whereafter the belly wall can subsequently be loaded on the inside via the pre-cut for pushing outward.

In order to prevent the heart from being touched by the knife and damaged, the method according to the invention may be characterized by (9) tearing open the pericardium during step (7) or step (8). The heart hereby comes to lie relatively freely which provides the possibility of (10) pressing the heart out of the path of the knife during step (8). The heart hereby remains intact.

Use can be made of a knife with a straight or curved, particularly concave curved, cutting edge. In preference however the method according to the invention is characterized by (11) using a rotatably driven disc-shaped knife for performing steps 3, 4, 6 and 7 or 8.

An effective continuation of the cut after opening of the belly wall is ensured with an embodiment of the method characterized by (12) moving the knife to the inside during step (7) or step (8).

The invention also relates to an apparatus for opening a slaughtered animal suspended from the hind legs with a method as claimed in any of the preceding claims, said apparatus comprising:
a knife borne by a structure (57) displaceable relative to the animal in a substantially vertical plane by means of guide and drive means and having a cutting edge oriented such that the slaughtered animal can be opened therewith by being cut into during relative displacement of the knife; and
a pin extending in the plane of the knife beyond the cutting edge thereof, said pin having a guide surface and extending into the slaughtered animal during operation;
in which the guide surface is adapted for directing toward the belly wall and can slide along the inner surface of the belly wall of a slaughtered animal during opening of that animal and which pin holds the intestines clear of that belly wall, the relative positioning of the guide surface and the knife being such that the guide surface is adapted to press the belly wall towards and beyond the cutting edge of the knife; and
actuating means for displacing the pin.

Such an apparatus is e.g. known from AU-A-573603.

It is a purpose of the invention to design the apparatus in a way such that provisions are provided making an essential contribution to correct performing of the cutting operation.

Relative to this prior art specification the apparatus according to the invention is characterised in that the actuating means are adapted such as to allow displacement of the pin relative to said structure bearing the knife.

The apparatus may be characterized in that the actuating means are adapted for displacing the pin between a relatively low first position, wherein the pin is substantially oriented vertically downward, and a second position in which the pin is retracted.

It is noted that US-A-2-198 814 and US-A-3 445 931 both relate to a tool for opening a slaughtered animal. Relative to these prior art specifications it is noted that they do not relate to the method according to the invention in that they neither mention nor suggest method steps (2), (3), (4), (6), (7) and (8) according to the invention. Furthermore, relative to the apparatus according to the invention it is noted that the mentioned two prior art references are provided with guide surfaces which are, contrary to the invention, not adapted for directing toward the belly wall but rather are facing into the opposite direction.

Preferably the apparatus is characterised in that the knife is disc-shaped and rotatably drivable. It is noted that this feature per se is known from DE-C-237 829 and AU-B-31317/84. In order to enhance the efficacy of the cutting operation in this Australian specification use is made of an external pressing means indicated as a skid. Furthermore it is noted that the method and apparatus disclosed in this Australian specification relate to the handling of a slaughtered animal suspended from the fore legs, whereas the invention is specifically directed to the animals being suspended from the hind legs.

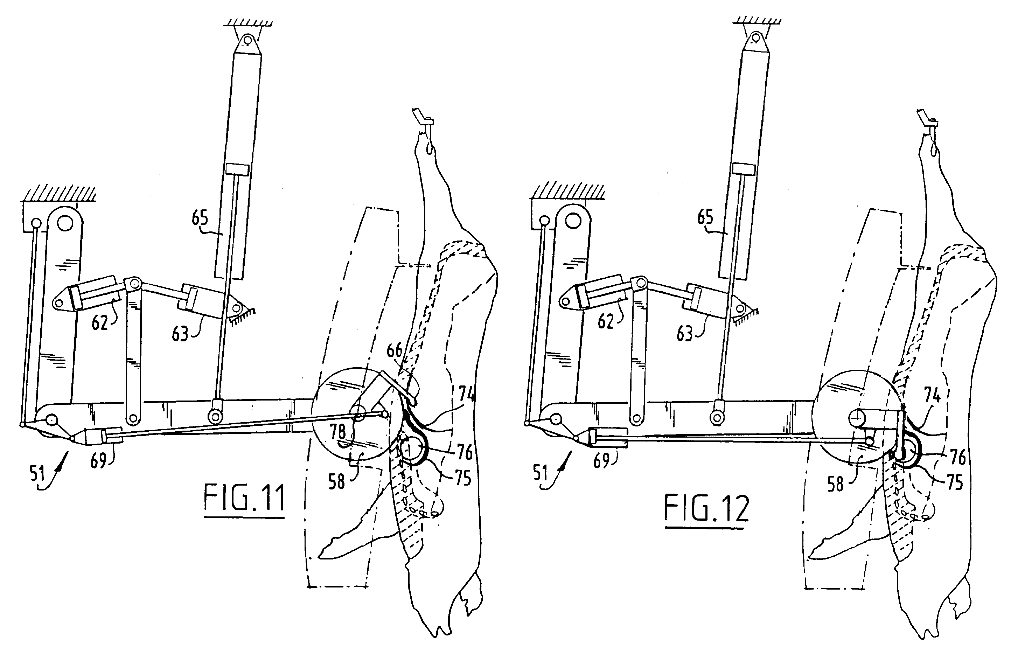

In summary, the Australian specification mentions the following steps of the method according to the invention, as specified above: steps (1), (4) (though basically in opposite direction) and (5). The skid according to figures 11, 12, 13, 14, 15 and 16 is actually a following member in order that the frame from which the knife is suspended can effectively follow the contour of the belly wall to be cut through.

The apparatus according to the invention preferably has the feature that the guide surface has a rounded shape, for instance a spherical shape. This avoids snagging of the pin against unevenness on the inside of the belly wall.

An embodiment in which a notching member extends from the guide surface has the advantage that the midriff can be cut through easily herewith.

The apparatus can have the special feature that the pin forms part of the guide and drive means.

To move the pin between the said two positions the device may have the feature that the actuating means comprise a motor.

Simpler however is the embodiment in which the actuating means comprise spring means urging the pin to the first position.

In this embodiment, the pin, when encountering a certain resistance, for instance when meeting the midriff, can undergo a resistance force whereby it pivots from the first to a second position. In the embodiment in which the guide surface has no notching member, the cutting surface of the knife can be further released for cutting through the midriff by moving the pin to the second position. The pin can then pass through the resulting opening in the midriff. In the same manner a cut can be made in the pericardium and the heart can subsequently be pressed by the pin out of the path of the knife. The heart can thus remain intact during the cutting operation.

In a particular embodiment the apparatus has the feature that the guide and drive means are adapted such that the knife follows a preselected path. To perform the above described step (12) the apparatus according to the invention can have the characteristic that the guide and drive means are embodied such that the knife follows a path running roughly parallel to the shape of the contour to be followed of the slaughtered animal but, after cutting through the belly wall, is displaced over a distance to the inside during cutting through of the breast bone.

In a particular embodiment the apparatus has the feature that the guide and drive means are embodied such that the path of the knife deflects locally relative to a vertical plane. Particular organs of the slaughtered animal, for instance the male genital organ, can hereby be avoided during the cutting operation.

Such an advantage can also be obtained with an embodiment in which the guide and drive means are embodied such that the knife has a limited displacement outside said vertical plane.

A fixed path, for instance parallel to the contour of the slaughtered animal for cutting open can be obtained with an embodiment in which the guide and drive means comprise a rod mechanism coupled at two locations to a fixed position.

In order to be able to vary this path and follow a path differing from the contour during the cutting operation, such as for performing the method according to the invention with the above described step (12), the apparatus can have the characteristic that the guide and drive means comprise at least one element of adjustable length controllable by means of control means.

As stated above, the apparatus may be manually operable or embodied as a machine. In this latter case the apparatus is characterized by drive means for drivebly displacing the knife.

The invention will now be elucidated with reference to the annexed drawings, wherein:
figure 1 shows a schematic perspective view of an installation with a device according to the invention;
figures 2, 3 and 4 show perspective views of three different embodiments;
figure 5 is a perspective view of a device according to the invention, wherein the guiding of the disc-shaped, rotatably driven knife takes place by means of an assembly of rods and cylinders: and
figures 6-14 show schematic cross sectional views of the device according to figure 5 in different states of the cutting operation.

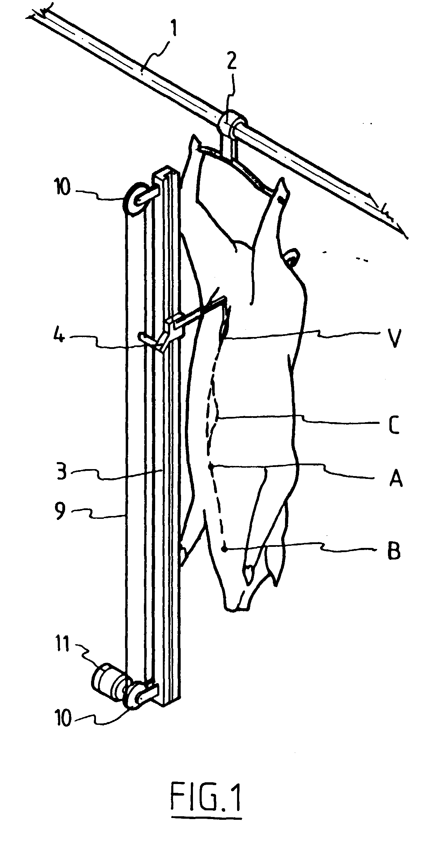

The figures 1-4 are used to explain the method according to the invention. The devices shown therein, however, are not covered by apparatus claim 6.

A support 1 for suspending slaughtered animals, in this case pigs, on the hind legs may be a component of a transport system. wherein the support 1 is for instance a bent or straight tube which is hung from a veiling by means that are not shown. Hook-like elements 2 can be pushed along the tube 1 by means that are not shown, to which hook-like element are fastened the hind legs of the slaughtered animal. Diverse operations are performed on the slaughtered animal along the transport path defined by the shape of the tube 1, and the invention is limited here to the opening of the slaughtered animal so that the intestines of the animal become accessible.

Opening of the carcass is performed mechanically according to the invention, for which purpose a vertical guiding 3 is arranged at a certain distance from the support 1, along which guiding a carriage 4 is movable up and downward. The guiding stands vertically here but can assume any desired position, while it can moreover deviate from the straight line.

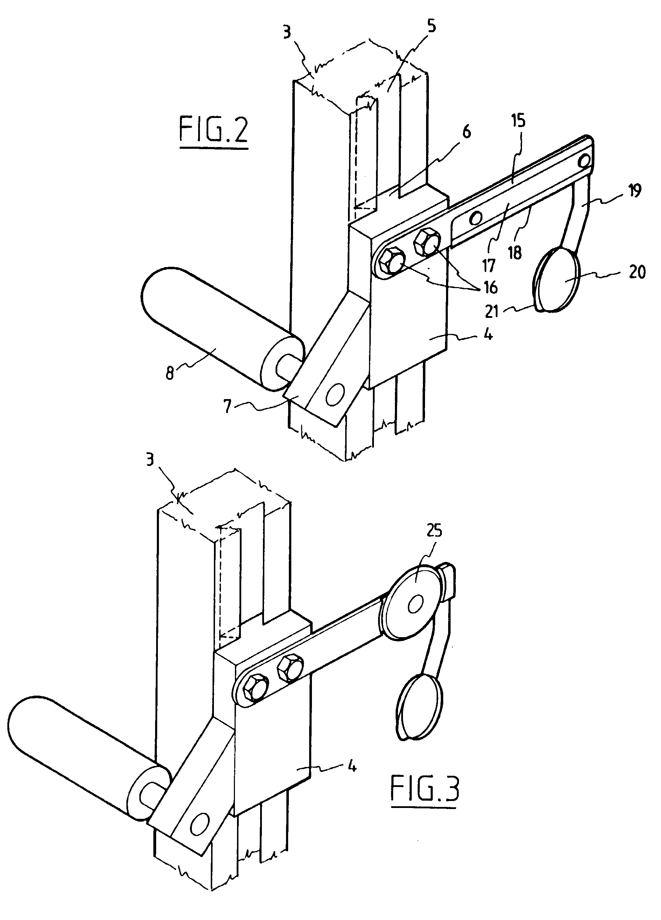

As shown in figures 2-4, the guiding is a bar of rectangular cross section wherein a dovetail groove 5 is recessed in which a dovetail wedge 6 of carriage 4 is received fittingly and slidably.

The carriage is embodied with an arm 7 to which can be fixed a hand-grip 8 for accomplishing the reciprocating movement as referred to above. The hand-grip can alternatively be used as point of engagement for an endless belt 9 which is arranged round reversing rollers 10 on the top and bottom of the vertical guiding 3, one of which rollers can be set into rotation for instance by an electric motor 11. Due to the coupling of arm 7 to a part of the endless element 9 the carriage can be moved along the guiding 3 in respectively up and downward sense by energizing the motor 11.

The above described device can be used according to the method of the invention. To this end, the slaughtered animal 2 suspended from the support 1 is first provided with a pre-cut V on the left in figure 1 whereafter, by placing the slaughtered animal in front of the guiding 3, that is, with the belly side facing thereto, the extension 19 with guide surface 20 can be hooked into this pre-cut behind the belly wall. By subsequently moving the hand knife downward or by energizing the motor 11 the carriage 4 and therewith the knife holder 15 with the knife 17 are moved downward. During the downward movement a continuous outward directed force must be exerted on the inner wall of the belly wall of the slaughtered animal by means of the spherical guide surface 20, whereby the belly wall is wholly opened by the cutting edge 18 of knife 17 during the downward movement. The cut is continued until the guide surface touches the midriff, which is cut through by the notching knife 21, and then as far as the breast bone, the beginning of which is indicated with A and the end with B. The cut can be ended at A but can also be continued at B, for which purpose the knife 17 can be carried along or through the breast bone. The belly side of the slaughtered animal is thus entirely opened.

It is noted that at the position of the male genital organ the straight cut can be replaced by a deflection C, which cut can be realized by allowing the knife holder 15 to follow a path deviating from the straight path. This can be carried out for instance by locally bending outward the guide bar 3, but it is possible to arrange the knife holder 15 slidably relative to the carriage 4 and have it moved by separate drive means.

Figure 3 shows an embodiment which is distinguished from the embodiment of figure 2 in that the knife 17 is not embodied as a straight knife blade but as a freely rotatable circular knife blade 25. The operation of this device is otherwise the same as that of figure 2.

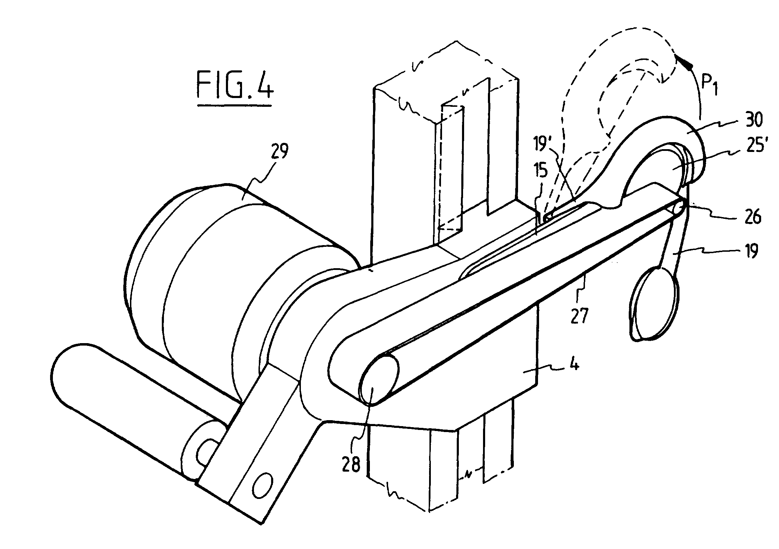

Figure 4 shows a device wherein the carriage 4 is embodied with a knife holder 15 provided with a driven knife blade 25'. The knife blade is embodied with a pinion 26 around which is trained an endless element 27 which can be set into rotation by a motor 29 via a drive pinion 28. The knife blade 25' can be set into rotation herewith, which can improve the cutting action.

The knife blade 25' can also be used for arranging the pre-cut V. The extension 19 is fixed to a pivot arm 19' which can be folded upward according to arrow P1 so that the knife 25 on the front side is released. A protective cover 30 can be fastened to the extension 19 which protects the upper part of the knife in the downward folded position.

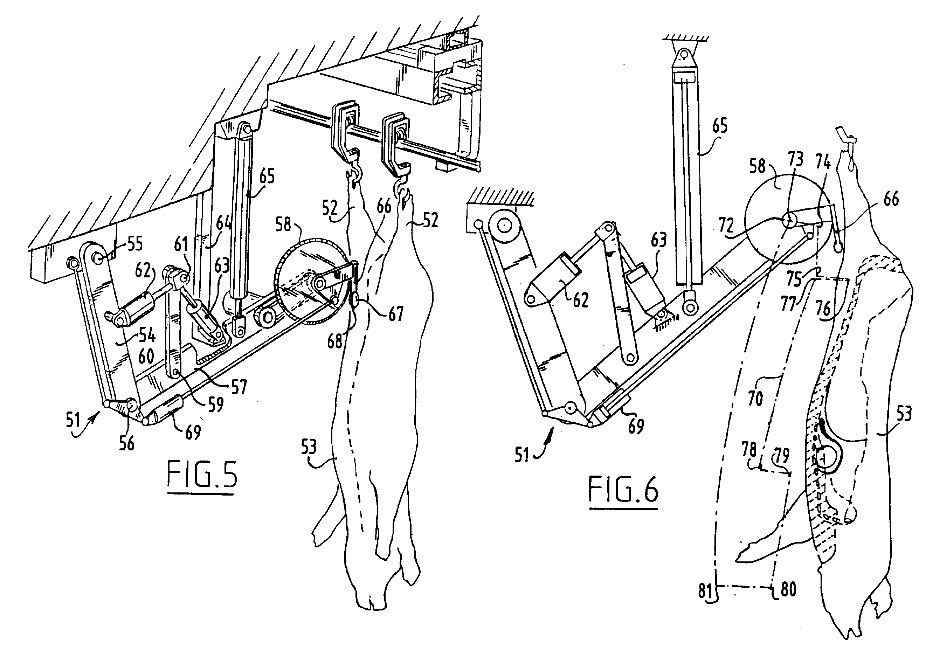

Figure 5 shows a device 51 for cutting open a pig 53 suspended from the hind legs 52. The device comprises a construction to be described hereinbelow with a number of arms and cylinders connected for mutual pivoting, all of which are movable in a vertical plane.

A first arm 54 is coupled to a fixed position via a first hinge 55. Via a second hinge 56 the first arm 54 supports a second arm 57 which bears a knife 58 driven rotatably by means of a motor 71. At a distance from the second hinge 56 the second arm 57 supports via a third hinge 59 a third arm 60 which supports via a fourth hinge 61 two cylinders 62, 63. The first cylinder 62 is connected to the first arm 54 and the second cylinder 63 is connected via a rod 64 to a fixed position. Further a drive cylinder 65 extends between this fixed position and the second arm 57. This drive cylinder 65 is the main drive for displacing the knife 58 in vertical direction during processing of the pig 53.

Placed for coaxial pivoting with the knife 58 is a guide pin 66 with a rounded guide surface 67 with a notching member 68. The guide pin 66 can be swivelled round the knife 58 by means of a third cylinder 69.

Not drawn are the control means needed to provide the cylinders 62, 63, 65, 69 with a variable length.

Figures 6-14 show schematically the manner in which the device 51 opens the pig 53. Indicated with a dash-dot line is the path 70 followed by the centre 72 of the knife 58. The path is characterized in the figures with the finishing points of the successive parts, the finishing points of which are indicated respectively with 73, 74, 75, 76, 77, 78, 79, 80 and 81. The path 70 will now be first briefly described. Indicated herein is which position the respective cylinders 62, 63 and 65 assume, this with the designations "IN" and "OUT".

The rest position 73 shown in figure 6 is a starting position in which the cylinder 62 is OUT, the cylinder 63 is OUT and cylinder 65 IN.

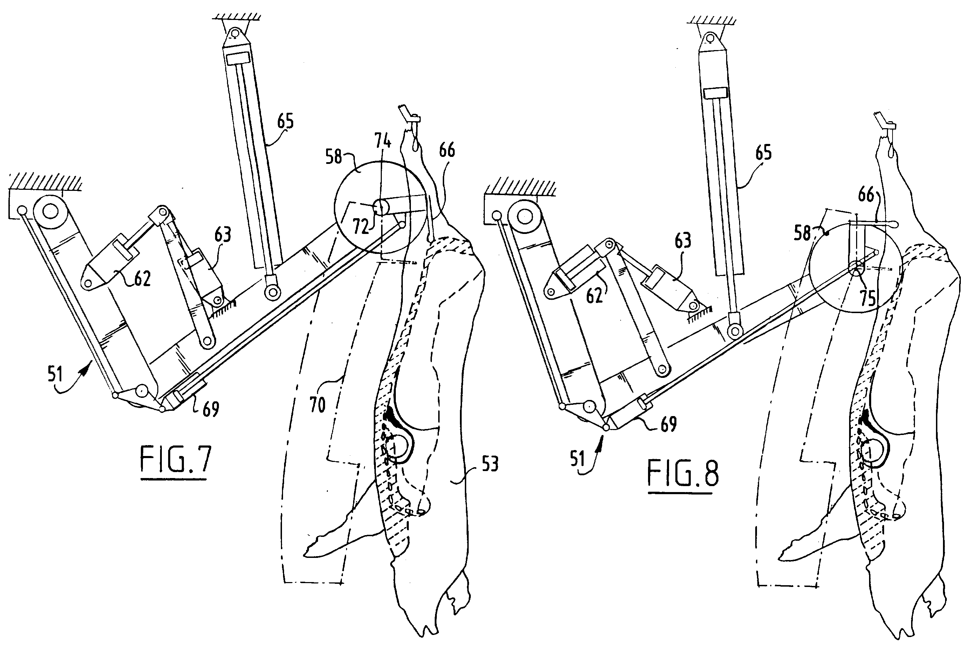

The position 72 shown in figure 7 is the starting position in which the cylinder 62 is IN.

The position 75 shown in figure 8 is a search position in which the cylinder 65 is slightly OUT.

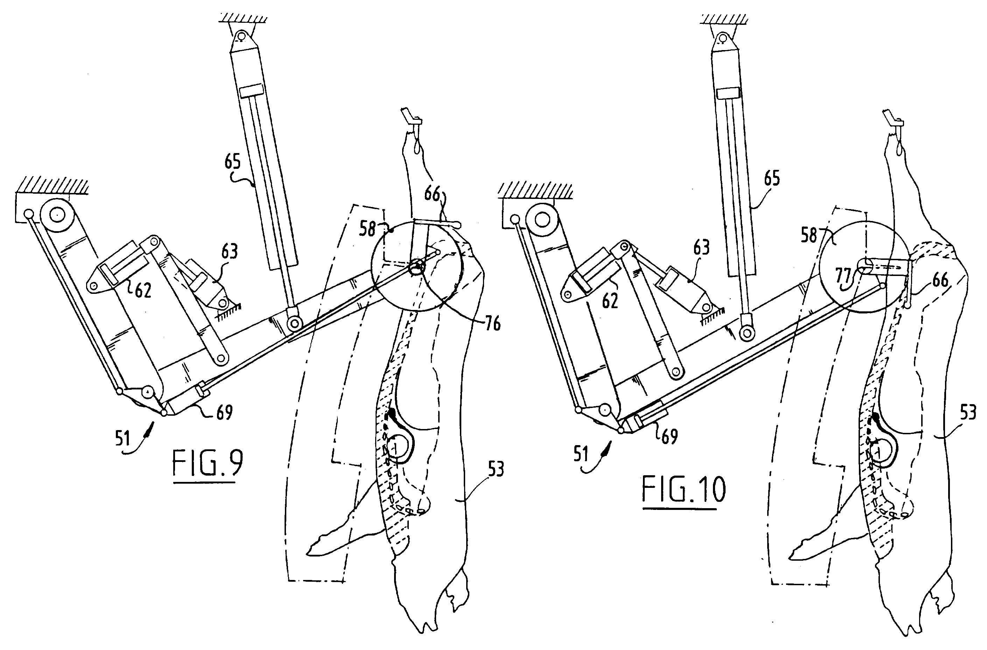

Figure 9 shows the cutting position 76. The cylinder 63 is IN but can optionally assume an intermediate position.

Figure 10 shows a retracted position 77 corresponding with the position 75 shown in figure 8. The reason for this reciprocal displacement is explained hereinbelow.

Figure 11 shows a position 78 in which the cylinder 65 is approximately half OUT.

Figure 12 shows a position 79 displaced to the inside in which the cylinder 63 is IN but can optionally assume an intermediate position.

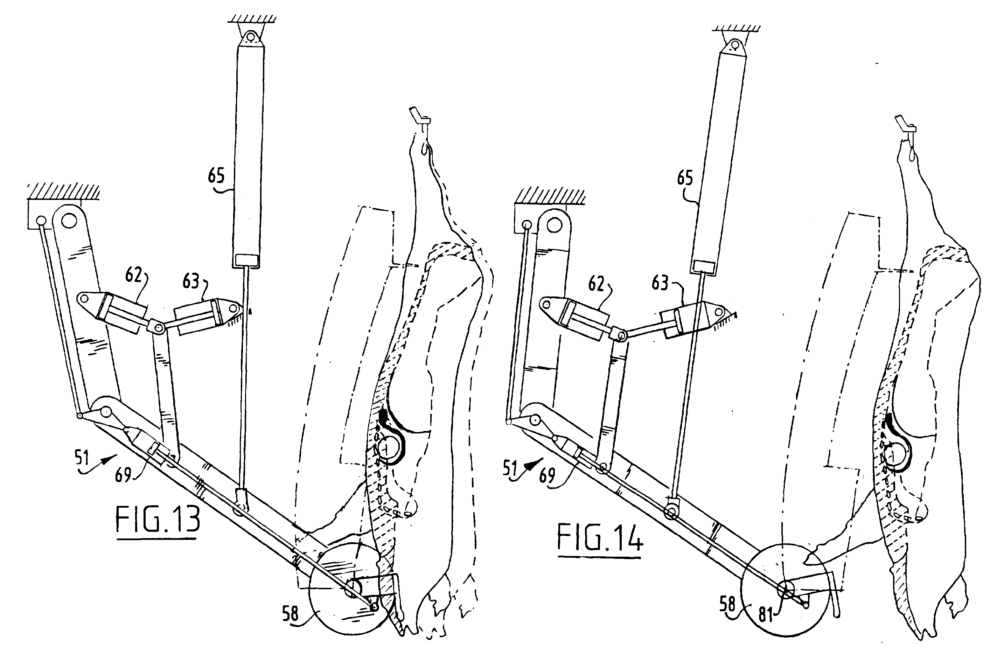

Figure 13 shows the finishing position 80 of the actual cutting operation. The cylinder 65 is herein OUT.

Figure 14 shows the swing-out position 81 in which cylinder 62 and cylinder 63 are both OUT. The device 51 is subsequently returned to the starting situation shown in figure 6.

The guide pin 66 can assume different positions under the control of the cylinder 69. This pin 66 makes an essential contribution to correct performing of the cutting operation. In the situation shown in figure 6 the position of pin 66 is in principle irrelevant.

In the position 72 according to figure 7 the position of pin 66 is likewise irrelevant.

In the position 75 according to figure 8 a cut must first be made in the belly wall of pig 53. The pin is set for this purpose into its raised position by energizing cylinder 69.

In the position 76 according to figure 9 the knife is moved inward to make the cut.

During the transition from the position 76 to the position 77 shown in figure 10, in which the knife is retracted from the cut made in the belly wall, the pin 66 is displaced downward. The pin can hereby protrude through the made cut into the abdomen of the pig 53. In the position 77 it can pull the belly wall outward, whereby the intestines are held clear of the belly wall, whereby knife 58 cuts only through the belly wall and leaves the intestines intact.

In the path between the position 77 and the position 78 according to figure 11 the belly wall is cut through. In the position 78 the knife 58 has reached the breast bone 73. This is on the verge of being cut through by the knife 58. The pin 66 has meanwhile moved upward to the position shown in figure 11 through contact with the tough midriff 74. It is noted that for this purpose use can be made of either a spring load or a sensor controlling the cylinder 69.

The knife 58 is subsequently moved from the position 78 to the position 79 according to figure 12. Herein a first cutting through of the breast bone takes place. The pin 66 has meanwhile cut through or torn the midriff, displaced downward to the position drawn in figure 12 and thus is in a position to cut or tear through the pericardium 75, followed by pressing the heart 76 out of the path of the knife 58. This therefore remains intact during the operation with the knife 58.

A downward continued displacement to the position 80 shown in figure 13 then takes place. The pin 66 also serves here to pull the throat wall of pig 53 to the path of the knife. This has a very beneficial effect on the reliability of the cutting operation due to the positive guiding of the knife 58. When the knife 58 has reached the position 80 shown in figure 13 it has left the larynx cavity of pig 53 and
the actual cutting operation is completed. The knife can subsequently be placed in a position for processing a following pig. To this end a displacement first takes place to the position 81 according to figure 14 wherein the pin is again situated in its folded down position, followed by a displacement to the starting position 73 as in figure 6.

It will be apparent that mechanically the device 51 is comparatively simple and can be embodied inexpensively. Attention is drawn to the fact that the pin 66 does not have to be controlled by the cylinder 59 but can also be spring loaded. Control of pin 66 can also take place by means of the cylinder 69 on the basis of measurement data provided for instance by a pressure-sensitive sensor on the free extremity of pin 66.

## Claims

1. Method for opening a slaughtered animal comprising the following steps of:
(1) providing a slaughtered animal;
(2) suspending the animal from the hind legs;
(3) arranging a cut only in the belly wall close to the hind legs substantially in the plane of symmetry of the animal;
(4) continuing this cut in substantially vertical downward direction;
(5) holding the intestines clear of the belly wall during step (4);
(6) tensioning the belly wall during step (4) by pushing the belly wall outward;
(7) continuing the cut after step (4) to cut through the midriff;
(8) continuing the cut after step (6) to cut through the breast bone.

2. Method as claimed in claim 1,
**characterized by**
(9) tearing open the pericardium during step (7) or (8).

3. Method as claimed in claim 1,
**characterized by**
(10) pressing the heart out of the path of the knife during step (8).

4. Method as claimed in claim 1,
**characterized by**
(11) using a rotatably driven disc-shaped knife for performing steps 3, 4, 6 and 7 or 8.

5. Method as claimed in claim 1,
**characterized by**
(12) moving the knife to the inside during step (7) or step (8).

6. Apparatus for opening a slaughtered animal suspended from the hind legs with a method as claimed in any of the preceding claims, said apparatus comprising:
a knife borne by a structure (57) displaceable relative to the animal in a substantially vertical plane by means of guide and drive means and having a cutting edge oriented such that the slaughtered animal can be opened therewith by being cut into during relative displacement of the knife; and
a pin extending in the plane of the knife beyond the cutting edge thereof, said pin having a guide surface and extending into the slaughtered animal during operation;
in which the guide surface is adapted for directing toward the belly wall and can slide along the inner surface of the belly wall of a slaughtered animal during opening of that animal and which pin holds the intestines clear of that belly wall, the relative positioning of the guide surface and the knife being such that the guide surface is adapted to press the belly wall towards and beyond the cutting edge of the knife; and
actuating means for displacing the pin;
**characterized in that**
the actuating means are adapted such as to allow displacement of the pin relative to said structure (57) bearing the knife.

7. Apparatus as claim in claim 6
**characterized in that**
the actuating means are adapted for displacing the pin between a relatively low first position, wherein the pin is substantially oriented vertically downward, and a second position in which the pin is retracted.

8. Apparatus as claimed in claim 6,
**characterized in that** the knife is disc-shaped and rotatably drivable.

9. Apparatus as claimed in claim 6,
**characterized in that** the guide surface has a rounded shape, for instance a spherical shape.

10. Apparatus as claimed in claim 6,
**characterized in that** a notching member extends from the guide surface.

11. Apparatus as claimed in claim 6,
**characterized in that** the pin forms part of the guide and drive means.

12. Apparatus as claimed in claim 10,
**characterized in that** the actuating means comprise a motor.

13. Apparatus as claimed in claim 10,
**characterized in that** the actuating means comprise spring means urging the pin to the first position.

14. Apparatus as claimed in claim 6,
**characterized in that** the guide and drive means are adapted such that the knife follows a preselected path.

15. Device as claimed in claim 14 for performing the method as claimed in claim 5,
**characterized in that** the guide and drive means are embodied such that the knife follows a path running roughly parallel to the shape of the contour to be followed of the slaughtered animal but, after cutting through the belly wall, is displaced some distance to the inside during or prior to cutting through of the attachments between the ribs and the breast bone or cutting through the breast bone.

16. Apparatus as claimed in claim 6, **characterized in that** the guide and drive means are embodied such that the path of the knife deflects locally relative to a vertical plane.

17. Apparatus as claimed in claim 6, **characterized in that** the guide and drive means are embodied such that the knife has a limited displacement outside said vertical plane.

18. Apparatus as claimed in claim 14, **characterized in that** the guide and drive means comprise a rod mechanism coupled at three locations to a fixed position.

19. Apparatus as claimed in claim 18,
**characterized in that** the guide and drive means comprise at least one element of adjustable length controllable by means of control means.

20. Apparatus as claimed in claim 6,
**characterized by** drive means for drivably displacing the knife.

## Patentansprüche

1. Verfahren zum Öffnen eines geschlachteten Tieres, das die folgenden Schritte umfaßt:
(1) Zuführen eines geschlachteten Tieres;
(2) Aufhängen des Tieres an den Hinterläufen;
(3) Anordnen eines Schnittes lediglich in der Bauchwand nahe den Hinterläufen, im wesentlichen in der Symmetrieebene des Tieres ;
(4) Fortführen dieses Schnittes in im wesentlichen vertikaler Richtung nach unten;
(5) Fern- bzw. Freihalten der Eingeweide von der Bauchwand während des Schrittes (4);
(6) Dehnen der Bauchwand während des Schrittes (4) durch Drücken der Bauchwand nach außen;
(7) Fortführen des Schnitts nach dem Schritt (4), um das Zwerchfell zu durchschneiden;
(8) Fortführen des Schnittes nach Schritt (6), um das Brustbein zu durchschneiden.

2. Verfahren nach Anspruch 1.,
gekennzeichnet durch (9) Aufreißen des Perikardium während des Schrittes (7) oder (8).

3. Verfahren nach Anspruch 1.,
gekennzeichnet durch
(10) Drücken des Herzens aus der Bahn des Messers während des Schritts (8).

4. Verfahren nach Anspruch 1.,
gekennzeichnet durch
(11) Verwenden eines drehend angetriebenen, scheibenförmigen Messers zur Durchführung der Schritte 3, 4, 6 und 7 oder 8.

5. Verfahren nach Anspruch 1.,
gekennzeichnet durch
(12) Bewegen des Messers zu der Innenseite während des Schrittes (7) oder des Schrittes (8).

6. Vorrichtung zum Öffnen eines an den Hinterläufen aufgehängten, geschlachteten Tieres mit einem Verfahren nach einem der vorstehenden Ansprüche, wobei die Vorrichtung umfaßt:
Ein von einem Aufbau (57) getragenes Messer, das relativ zu dem Tier mittels Führungs- und Antriebseinrichtungen in einer im wesentlichen vertikalen Ebene versetzbar ist und eine Schneidkante aufweist, die derart orientiert ist, daß das geschlachtete Tier damit geöffnet werden kann, indem in es hineingeschnitten wird während des relativen Versatzes des Messers; und
einen Dorn, der sich in der Ebene des Messers über dessen Schneidkante erstreckt, wobei der Dorn eine Führungsfläche hat und sich in das geschlachtete Tier während des Vorgangs erstreckt;
wobei die Führungsfläche ausgelegt ist, um in Richtung der Bauchwand gerichtet zu sein und entlang der inneren Oberfläche der Bauchwand eines geschlachteten Tieres während des Öffnens des Tieres gleiten kann und wobei der Dorn die Eingeweide fern- bzw. freihält von der Bauchwand, wobei die relative Positionierung der Führungsfläche und des Messers derart sind, daß die Führungsfläche ausgelegt ist, um die Bauchwand in Richtung und über die Schneidkante des Messers zu drücken; und
Betätigungsmittel zum Versetzen des Dorns;
dadurch gekennzeichnet, daß
die Betätigungsmittel derart ausgelegt sind, daß sie einen Versatz des Dorns relativ zu dem das Messer tragenden Aufbau (57) gestatten.

7. Vorrichtung nach Anspruch 6.,
dadurch gekennzeichnet, daß
die Betätigungsmittel ausgelegt sind, um den Dorn zwischen einer relativ niederen ersten Position, in welcher der Dorn im wesentlichen vertikal nach unten orientiert ist und einer zweiten Position, in welcher der Dorn zurückgezogen ist, zu versetzen.

8. Vorrichtung nach Anspruch 6., dadurch gekennzeichnet, daß das Messer scheibenförmig und rotierend antreibbar ist.

9. Vorrichtung nach Anspruch 6., dadurch gekennzeichnet, daß die Führungsfläche eine abgerundete Form, beispielsweise eine sphärische Form, hat.

10. Vorrichtung nach Anspruch 6., dadurch gekennzeichnet, daß sich ein Einkerbelement von der Führungsfläche erstreckt.

11. Vorrichtung nach Anspruch 6., dadurch gekennzeichnet, daß der Dorn Teil der Führungs- und Antriebseinrichtungen bildet.

12. Vorrichtung nach Anspruch 10., dadurch gekennzeichnet, daß die Betätigungsmittel einen Motor umfassen.

13. Vorrichtung nach Anspruch 10., dadurch gekennzeichnet, daß die Betätigungsmittel Federmittel umfassen, welche den Dorn zu der ersten Position hin zwingen.

14. Vorrichtung nach Anspruch 6., dadurch gekennzeichnet, daß die Führungs- und Antriebseinrichtungen derart ausgelegt sind, daß das Messer einer vorgewählten Bahn folgt.

15. Vorrichtung nach Anspruch 14. zur Durchführung des Verfahrens nach Anspruch 5, dadurch gekennzeichnet, daß die Führungs- und Antriebseinrichtungen derart ausgestaltet sind, daß das Messer einer Bahn folgt, die in etwa parallel zu der Form der zu folgenden Kontur des geschlachteten Tieres verläuft, daß es jedoch nach dem Durchschneiden der Bauchwand um einen gewissen Abstand nach innen versetzt wird während oder vor dem Durchschneiden der Anbringungen zwischen den Rippen und dem Brustbein oder dem Durchschneiden des Brustbeins.

16. Vorrichtung nach Anspruch 6., dadurch gekennzeichnet, daß die Führungs- und Antriebseinrichtungen derart ausgeführt sind, daß die Bahn des Messers lokal relativ zu einer vertikalen Ebene abweicht.

17. Vorrichtung nach Anspruch 6., dadurch gekennzeichnet, daß die Führungs- und Antriebseinrichtungen derart ausgeführt sind, daß das Messer einen begrenzten Versatz außerhalb der vertikalen Ebene hat.

18. Vorrichtung nach Anspruch 14., dadurch gekennzeichnet, daß die Führungs- und Antriebseinrichtungen einen Stangenmechanismus umfassen, der an drei Stellen mit einem Festpunkt gekoppelt ist.

19. Vorrichtung nach Anspruch 18., dadurch gekennzeichnet, daß die Führungs- und Antriebseinrichtungen zumindest ein Element einstellbarer Länge umfassen, das mittels Steuermitteln steuerbar ist.

20. Vorrichtung nach Anspruch 6., gekennzeichnet durch Antriebsmittel zum angetriebenen Versatz des Messers.

## Revendications

1. Procédé permettant d'ouvrir un animal abattu comprenant les étapes consistant à :
(1) fournir un animal abattu ;
(2) suspendre l'animal par les pattes arrière;
(3) former une découpe seulement dans la paroi du ventre, à proximité des pattes arrière, sensiblement dans le plan de symétrie de l'animal ;
(4) poursuivre cette découpe dans un sens vertical orienté vers le bas;
(5) maintenir les intestins dans une position dégagée de la paroi du ventre pendant l'étape (4) ;
(6) placer la paroi du ventre sous tension au cours de l'étape (4) en poussant la paroi du ventre vers l'extérieur ;
(7) poursuivre la découpe après l'étape (4) pour découper la poitrine ;
(8) poursuivre la découpe après l'étape (6) pour découper le sternum.

2. Procédé selon la revendication 1, caractérisé en ce qu'il consiste à :
(9) ouvrir le péricarde au cours de l'étape (7) ou (8).

3. Procédé selon la revendication 1, caractérisé en ce qu'il consiste à :
(10) pousser le coeur hors de la trajectoire du couteau au cours de l'étape (8).

4. Procédé selon la revendication 1, caractérisé en ce qu'il consiste à :
(11) utiliser un couteau en forme de disque entraîné en rotation pour réaliser les étapes 3, 4, 6 et 7 ou 8.

5. Procédé selon la revendication 1, caractérisé en ce qu'il consiste à :
(12) déplacer le couteau vers l'intérieur pendant l'étape (7) ou l'étape (8).

6. Appareil pour ouvrir un animal abattu suspendu par les pattes arrières selon un procédé décrit dans l'une quelconque des revendications précédentes, ledit appareil comprenant :
un couteau supporté par une structure (57) pouvant être déplacée par rapport à l'animal dans un plan sensiblement vertical à l'aide de moyens de guidage et d'entraînement et possédant un bord de coupe orienté de telle sorte que l'animal abattu peut être ouvert avec ce dernier en étant découpé pendant le déplacement relatif du couteau ; et
une broche s'étendant dans le plan du couteau au-delà du bord de coupe de ce dernier, ladite broche présentant une surface de guidage et se prolongeant dans l'animal abattu pendant l'opération ;
selon laquelle la surface de guidage est adaptée pour se diriger vers la paroi du ventre et peut coulisser le long de la surface interne de la paroi du ventre d'un animal abattu pendant l'ouverture de cet animal, et laquelle broche maintient les intestins dans une position dégagée de la paroi du ventre, le positionnement relatif de la surface de guidage et du couteau étant tel que la surface de guidage est adaptée pour comprimer la paroi du ventre en direction et au-delà du bord de coupe du couteau ; et
des moyens d'activation pour déplacer la tige ;
caractérisé en ce que
les moyens d'activation sont adaptés pour permettre le déplacement de la broche par rapport à ladite structure (57) supportant le couteau.

7. Appareil selon la revendication 6
caractérisé en ce que
les moyens d'activation sont adaptés pour déplacer la broche entre une première position relativement basse, dans laquelle la broche est sensiblement orientée dans le sens vertical vers le bas, et une deuxième position dans laquelle la broche est rétractée.

8. Appareil selon la revendication 6, caractérisé en ce que le couteau a la forme d'un disque et peut être entraîné en rotation.

9. Appareil selon la revendication 6, caractérisé en ce que la surface de guidage présente une forme arrondie, par exemple, une forme sphérique.

10. Appareil selon la revendication 6, caractérisé en ce qu'un élément d'encochage s'étend à partir de la surface de guidage.

11. Appareil selon la revendication 6, caractérisé en ce que la broche fait partie des moyens de guidage et d'entraînement.

12. Appareil selon la revendication 10, caractérisé en ce que les moyens d'activation comprennent un moteur.

13. Appareil selon la revendication 10, caractérisé en ce que les moyens d'activation comprennent des moyens de ressort poussant en force la broche vers la première position.

14. Appareil selon la revendication 6, caractérisé en ce que les moyens de guidage et d'entraînement sont adaptés de telle sorte que le couteau suit une trajectoire présélectionnée.

15. Dispositif selon la revendication 14 pour réaliser le procédé selon la revendication 5, caractérisé en ce que les moyens de guidage et d'entraînement sont réalisés de telle sorte que le couteau suit une trajectoire située en parallèle à la forme du contour à suivre sur l'animal abattu, mais une fois la paroi du ventre coupée, est déplacé selon une certaine distance vers l'intérieur pendant ou avant l'opération de coupe dans les points d'insertion entre les côtes et le sternum ou de coupe dans le sternum.

16. Appareil selon la revendication 6, caractérisé en ce que les moyens de guidage et d'entraînement sont réalisés de telle sorte que la trajectoire du couteau dévie localement par rapport à un plan vertical.

17. Appareil selon la revendication 6, caractérisé en ce que les moyens de guidage et d'entraînement sont réalisés de telle sorte que le couteau présente un déplacement limité à l'extérieur dudit plan vertical.

18. Appareil selon la revendication 14, caractérisé en ce que les moyens de guidage et d'entraînement comprennent un mécanisme de tige couplé en trois emplacements à une position fixe.

19. Appareil selon la revendication 18, caractérisé en ce que les moyens de guidage et d'entraînement comprennent au moins un élément dont la longueur peut être réglée à l'aide de moyens de commande.

20. Appareil selon la revendication 6, caractérisé par des moyens d'entraînement pour déplacer le couteau en vue de son entraînement.
